# EUROPÄISCHE PATENTSCHRIFT

(11) **EP 4 243 246 B1**
(45) Veröffentlichungstag und Bekanntmachung des Hinweises auf die Patenterteilung: **10.09.2025**
(21) Anmeldenummer: 22020094.3
(22) Anmeldetag: 07.03.2022
(51) Int. Cl.: H02K 1/16, H02K 9/197, H02K 1/20, H02K 1/2706, H02K 1/276, H02K 3/24

(54) **ELEKTRISCHE MASCHINE FÜR EIN FAHRZEUG**
ELECTRIC MACHINE FOR A VEHICLE
MACHINE ÉLECTRIQUE POUR UN VÉHICULE

(43) Veröffentlichungstag der Anmeldung: 13.09.2023
(73) Patentinhaber: Dr. Ing. h.c. F. Porsche Aktiengesellschaft, 70435 Stuttgart (DE)
(72) Erfinder: Dubsky, Josef, 71292 Friolzheim (DE); Bauer, David, 71679 Asperg (DE); Engelhardt, Tobias, 70193 Stuttgart (DE)

(56) Entgegenhaltungen:
- EP-A2- 1 873 887
- CN-U- 213 879 402
- DE-A1- 102015 212 127
- STJEPAN STIPETIC ET AL: "Optimised design of permanent magnet assisted synchronous reluctance motor series using combined analytical-finite element analysis based approach", IET ELECTRIC POWER APPLICATIONS, IET, UK, vol. 10, no. 5, 1 May 2016 (2016-05-01), pages 330 - 338, XP006100982, ISSN: 1751-8660, DOI: 10.1049/IET-EPA.2015.0245

## Beschreibung

Die Erfindung betrifft eine elektrische Maschine für ein Fahrzeug.

US 9,755,463 B2 offenbart eine elektrische Maschine mit einem ersten Träger mit elektromagnetischen Elementen und einem zweiten Träger mit elektromagnetischen Elementen, wobei sich der zweite Träger relativ zum ersten Träger bewegen kann. Die elektrische Maschine weist eine hohe Stromdichte auf, verfügt jedoch über einen komplexen Aufbau.

DE 10 2018 112 347 A1 offenbart eine elektrische Maschine mit einem Stator und einem Statorblechpaket, wobei im Statorblechpaket Leiterelemente angeordnet sind, die mittels Kühlmittelkanälen gekühlt sind. Dies begünstigt hohe Stromdichten, allerdings besteht auch hier Optimierungspotential.

DE 10 2015 212 127 A1 offenbart eine elektrische Maschine nach dem Oberbegriff des Anspruchs 1.

STJEPAN STIPETIC ET AL: "Optimized design of permanent magnet assisted synchronous reluctance motor series using combined analytical-finite element analysis bass approach", IET ELECTRONIC APLLICATIONS, IET, UK, 2016, Vol. 10, Iss. 5, pages 330-338, XP006100982, ISSN: 1751-8660, DO: 10.1049/IET-EPA.2015.0245 offenbart eine weitere elektrische Maschine.

CN 213 879 402 U und EP 1 873 887 A2 offenbaren weiteren Stand der Technik.

Die Aufgabe der Erfindung ist es, eine demgegenüber verbesserte elektrische Maschine bereitzustellen. Es ist wünschenswert, mit konstruktiv einfachen Mitteln eine elektrische Maschine mit vergleichsweise hoher Stromdichte und einer erhöhten Effizienz bereitzustellen.

Diese Aufgabe wird durch eine elektrische Maschine nach Anspruch 1 gelöst.

Die elektrische Maschine dient für ein Fahrzeug. Die elektrische Maschine weist einen Stator umfassend einen Statorkörper (Statorblechpaket) auf, wobei der Statorkörper (entlang einer Umfangsrichtung) abwechselnd Statorzähne und Statornuten aufweist, wobei in den Statornuten jeweils ein oder mehrere Leiterelemente angeordnet sind. Am Statorkörper ist radial außerhalb der Statornuten und der Statorzähne ein Jochabschnitt mit einer sich radial erstreckenden Jochhöhe ausgebildet. Der Statorkörper weist einen Statoraußenradius auf. Das Verhältnis v₁ der Jochhöhe bezogen auf den Statoraußenradius beträgt zwischen 0,18 und 0,26 (0,18 ≤ Verhältnis v₁ ≤ 0,26).

Die vergleichsweise große Jochhöhe begünstigt eine hohe Effizienz der elektrischen Maschine, die durch einen erhöhten Blechanteil im Stator und somit einer vergleichsweise hohen Stromdichte erreicht wird. Dies führt zu einer Reduktion der Eisenverluste und damit einer erhöhten Effizienz der elektrischen Maschine.

Am Statorkörper sind pro Pol und pro Strang (eine Statorwicklung) zwei Statornuten oder drei Statornuten vorgesehen. Mehrere Leiterelemente können einen bzw. den Strang (eine Statorwicklung) bilden. Mit anderen Worten beträgt die Lochzahl (Anzahl Statornuten pro Pol und Strang) q = 2 oder q = 3. Dies führt zu Effizienzvorteilen und einem kompakten Bauraum. Das Verhältnis v₃ der Statorzahnbreite zur Statornutbreite beträgt bei zwei Statornuten pro Pol und pro Strang, zwischen 0,50 und 0,75 betragen (0,50 ≤ Verhältnis v₃ ≤ 0,75). Das Verhältnis v₃ der Statorzahnbreite zur Statornutbreite beträgt bei drei Statornuten pro Pol und pro Strang, zwischen 1,05 und 1,50 betragen (1,05 ≤ Verhältnis v₃ ≤ 1,50). Durch die angegebenen Verhältnisse v₃ kann eine große Statorzahnbreite erreicht werden, hingegen ist die Statornutbreite vergleichsweise gering. Es kann somit ein erhöhter Blechanteil erreicht werden, welcher die Eisenverluste reduziert. Damit geht eine hohe Stromdichte einher.

Insbesondere kann das Verhältnis v₁ der Jochhöhe bezogen auf den Statoraußenradius zwischen 0,20 und 0,24 (0,20 ≤ Verhältnis v₁ ≤ 0,24), weiter vorzugsweise zwischen 0,21 und 0,23 (0,21 ≤ Verhältnis v₁ ≤ 0,23) betragen. In einem konkreten Beispiel kann das Verhältnis v₁ der Jochhöhe bezogen auf den Statoraußenradius 0,22 betragen (Verhältnis v₁ = 0,22). Durch die Ausgestaltung des Statorkörpers mit diesen Verhältnissen kann die Effizienz der Maschine weiter optimiert werden.

Bei der elektrischen Maschine handelt es sich insbesondere um einen Traktionsmotor für ein Fahrzeug. Die elektrische Maschine ist dazu eingerichtet und/oder bestimmt, ein Fahrzeug, vorzugsweise alleinig, antreiben zu können (Traktionsantrieb). Bei dem Fahrzeug handelt es sich insbesondere um ein teilelektrisch oder vollelektrisch angetriebenes Kraftfahrzeug (Elektrofahrzeug), insbesondere um einen PKW wie bspw. einen Sportwagen. Bei den Leiterelementen handelt es sich insbesondere um Statorwicklungen.

Der Jochabschnitt bildet einen entlang der Umfangsrichtung geschlossenen Ringabschnitt des Statorkörpers. Der Statorkörper erstreckt sich entlang einer Axialrichtung. Die Statorzähne und die Statornuten erstrecken sich ebenfalls entlang bzw. parallel zur Axialrichtung.

Vorzugsweise kann der Statorkörper einen Statorinnenradius aufweisen, wobei das Verhältnis v₂ des Statorinnenradius bezogen auf den Statoraußenradius zwischen 0,61 und 0,69 beträgt (0,61 ≤ Verhältnis v₂ ≤ 0,69). Somit ergibt sich ein vergleichsweise geringer Statorinnenradius. Dies führt wiederum zu einem erhöhten Blechanteil im Stator, was die Effizienz steigert. Durch den geringen Statorinnenradius kann der Rotoraußenradius geringgehalten werden, was zu reduzierten Reibungsverlusten und damit zu einer gesteigerten Effizienz führt. Der Statoraußenradius kann ebenfalls vergleichsweise geringgehalten werden.

Insbesondere kann das Verhältnis v₂ des Statorinnenradius bezogen auf den Statoraußenradius zwischen 0,63 und 0,67 (0,63 ≤ Verhältnis v₂ ≤ 0,67), weiter vorzugsweise zwischen 0,64 und 0,66 (0,64 ≤ Verhältnis v₂ ≤ 0,66) betragen. In einem konkreten Beispiel kann das Verhältnis v₂ des Statorinnenradius bezogen auf den Statoraußenradius 0,65 betragen (Verhältnis v₂ = 0,65). Durch die Ausgestaltung des Statorkörpers mit diesen Verhältnissen kann die Effizienz weiter optimiert werden. Vorzugsweise kann der Statoraußenradius zwischen 105 mm und 142,5 mm (Millimeter) betragen. Dies trägt zu vergleichsweise geringen Reibungsverlusten und einer gesteigerten Effizienz bei. Insbesondere kann der Statoraußenradius zwischen 115 mm und 132,5 mm, weiter vorzugsweise zwischen 120 mm und 127,5 mm betragen. In einem konkreten Beispiel kann der Statoraußenradius 122,5 mm betragen.

Das Verhältnis v₃ be zwei Statornuten pro Pol und pro Strang zwischen 0,55 und 0,70 (0,55 ≤ Verhältnis v₃ ≤ 0,70), vorzugsweise zwischen 0,60 und 0,65 (0,60 ≤ Verhältnis v₃ ≤ 0,65) betragen.

Das Verhältnis v₃ be drei Statornuten pro Pol und pro Strang zwischen 1,15 und 1,40 (1,15 ≤ Verhältnis v₃ ≤ 1,40), vorzugsweise zwischen 1,20 und 1,35, (1,20 ≤ Verhältnis v₃ ≤ 1,35) und weiter vorzugsweise zwischen 1,25 und 1,30 (1,25 ≤ Verhältnis v₃ ≤ 1,30) betragen. In einem konkreten Beispiel kann das Verhältnis v₃ = 1,27 betragen.

Die elektrische Maschine kann, bspw. durch Abstimmung des Verhältnisses v₃, insbesondere derart eingerichtet sein, dass bei maximalem Strom eine maximale Stromdichte von größer als 40 A/mm² (Ampere/Quadratmillimeter), vorzugsweise von größer als 45 A/mm², weiter vorzugsweise zwischen 45 und 60 A/mm², insbesondere zwischen 50 und 60 A/mm², erreicht wird.

Vorzugsweise kann die elektrische Maschine eine Polpaarzahl p von p = 3 (3 Polpaare, also insgesamt 6 Pole) aufweisen. Damit kann eine hinreichend hohe Polpaarzahl bei vergleichsweise kompaktem Bauraum erreicht werden. Die vergleichsweise geringe Frequenz der Polpaarzahl von p = 3 bietet Effizienzvorteile, insbesondere im Zusammenhang mit den oben angegebenen geometrischen Verhältnissen.

Vorzugsweise kann am radial inneren Ende der Statorzähne jeweils ein Zahnkopf mit einem bezogen auf die Statorzähne (bzw. den Statorzahnquerschnitt außerhalb des Zahnkopfs) jeweils vergrößerten Querschnitt aufweisen. Dies begünstigt regelmäßig eine höhere Effizienz und eine hohe Stromdichte. Die Zahnköpfe können sich jeweils radial entlang einer definierten Zahnkopfhöhe erstrecken.

Vorzugsweise kann radial innen an den Statorkörper anschließend ein Spaltrohr angeordnet sein, wobei das Spaltrohr in radialer Richtung betrachtet bzw. nach radial innen die Statornuten überdeckt. Hierdurch kann eine Abdichtung des Statorraums relativ zum Rotorraum erfolgen. Die Statornuten können nach radial innen offen ausgebildet und durch das Spaltrohr überdeckt sein. Das Spaltrohr kann bspw. an den Statorzähnen bzw. an deren Zahnköpfen anliegen. Das Spaltrohr ist bspw. als, vorzugsweise faserverstärktes, Kunststoffrohr hergestellt. Das Spaltrohr kann aber auch aus einem mit dem Statorkörper befestigten elastischen und/oder flexiblen Material hergestellt sein. Beispielsweise kann das Spaltrohr als eine radial innere Auskleidung ("Liner") des Stators ausgestaltet sein.

Die elektrische Maschine weist einen elektromagnetisch mit dem Stator zusammenwirkenden, insbesondere trocken laufenden, Rotor auf. Der Rotor weist einen Rotoraußenradius auf, der um eine radial orientierte Luftspalthöhe (Luftspalt) geringer ist als der Statorinnenradius. In dem Luftspalt kann auch das Spaltrohr angeordnet sein. Zwischen dem Spaltrohr und einem radial innerhalb des Stators elektromagnetisch antreibbaren Rotor kann insbesondere eine Spielpassung ausgebildet sein.

Das Spaltrohr kann den Rotor gegenüber dem Stator abdichten, so dass der Rotor nicht von einem ggf. vorhandenen Kühlmedium des Stators benetzt werden kann. Eine Flüssigkeitsreibung mit dem Kühlmedium kann durch den, insbesondere trocken laufenden, Rotor vermieden werden. Zwischen dem Spaltrohr und dem Rotor kann ein Luftspalt ausgebildet werden, so dass der relativ zum Stator drehbare Rotor nicht an dem Spaltrohr reibt. Der Rotor kann insbesondere an einem Antriebsstrang des Kraftfahrzeugs ankoppelbar sein, so dass das Kraftfahrzeug rein elektrisch mit Hilfe der elektrischen Maschine angetrieben werden kann.

Vorzugsweise kann der Statorkörper aus einem Blechpaket ausgebildet sein, bei dem mehrere Statorblechscheiben entlang einer Axialrichtung hintereinander angeordnet sind, wobei die Statorblechscheiben jeweils eine Blechdicke von 0,25 mm oder weniger aufweisen. Dies trägt zu einem effizienten Betrieb der elektrischen Maschine mit hohen Leistungen bei. Insbesondere können die Statorblechscheiben eine Blechdicke von 0,10 mm bis 0,25 mm aufweisen.

Im Konkreten kann der Statorkörper aus einem Blechpaket herstellt sein, bei dem mehrere, insbesondere durch Stanzen aus einem Metallblech hergestellte, Statorblechscheiben in axialer Richtung hintereinander angeordnet und, vorzugsweise fluiddicht, aneinander angepresst sind. Insbesondere kann der Statorkörper kostengünstig durch Stanzpaketieren hergestellt werden. Vorzugsweise kann die elektrische Maschine eine Kühleinrichtung aufweisen, wobei die Kühleinrichtung mehrere Kühlkanäle aufweist, die sich jeweils von einem Eintritt (Kühlkanaleintritt) axial bzw. entlang der Axialrichtung durch den Statorkörper hindurch zu einem Austritt (Kühlkanalaustritt) erstrecken, wobei die Kühlkanäle jeweils mit einem als Kühlmedium dienenden Dielektrikum befüllt sind bzw. das als Kühlmedium dienende Dielektrikum führen. Dadurch kann Wärme, die im Betrieb der elektrischen Maschine am Stator entsteht, zuverlässig abgeführt werden.

Die elektrische Maschine kann optional ein Gehäuse aufweisen, welches ein erstes Teilgehäuse und ein zweites Teilgehäuse aufweisen kann.

Das erste Teilgehäuse kann an einem ersten axialen Ende des Stators angeordnet sein und zusammen mit dem Spaltrohr und der Stirnseite des Stators ein erstes Endvolumen definieren, welches bspw. als ein Ringraum ausgebildet sein kann. Das erste Endvolumen ist mit den Kühlkanälen (Kühlkanaleintritt) im Stator strömungsverbunden und mit als Kühlmedium dienendem Dielektrikum gefüllt. Im ersten Endvolumen können ggf. an den Leiterelementen ausgebildete Wickelköpfe angeordnet sein. Unabhängig davon kann am ersten Teilgehäuse ein Einlass zur Zuführung von Kühlmedium ausgebildet sein.

Das zweite Teilgehäuse kann an einem zweiten, insbesondere also an dem anderen axialen Ende des Stators angeordnet sein und zusammen mit dem Spaltrohr und der Stirnseite des Stators ein zweites Endvolumen definieren, welches bspw. als ein Ringraum ausgebildet sein kann. Das zweite Endvolumen ist mit den Kühlkanälen (Kühlkanalaustritt) im Stator strömungsverbunden und mit als Kühlmedium dienendem Dielektrikum gefüllt. Im zweiten Endvolumen können ggf. an den Leiterelementen ausgebildete Wickelköpfe angeordnet sein. Unabhängig davon kann am zweiten Teilgehäuse ein Auslass zur Abführung von Kühlmedium ausgebildet sein.

Der Auslass am zweiten Teilgehäuse kann mit dem Einlass am ersten Teilgehäuse strömungsverbunden sein. In dieser Strömungsverbindung können eine Fluidpumpe zur Förderung des Kühlmediums, ein oder mehrere Wärmetauscher zur Kühlung des Kühlmediums und/oder ein Kühlmediumreservoir eingebunden sein.

Die im Statorkörper vorgesehenen Kühlkanäle können separat zu den Statornuten ausgebildet sein. Hiermit kann ein Strömungswiderstand geringgehalten werden, da das Kühlmedium im Kühlkanal "frei fließen" kann und nicht die Leiterelemente (Strömungshindernis) passieren bzw. umströmen muss. Die Kühlkanäle können sich jeweils axial bzw. entlang der Axialrichtung, durch den Statorkörper hindurch erstrecken. Die Mittellängsachsen der Kühlkanäle können jeweils parallel zu den Mittellängsachsen der Statornuten angeordnet sein.

Alternativ hierzu können die Kühlkanäle jeweils in einer der Statornuten angeordnet sein, so dass die Leiterelemente über die gesamte axiale Länge des Statorkörpers mit dem als Kühlmedium dienenden Dielektrikum gekühlt werden, insbesondere (bezogen auf das oder die Leiterelemente) "von außen" durch das Kühlmedium umströmt werden. Mit anderen Worten fallen die Kühlkanäle jeweils mit den Statornuten zusammen (Statornut gleichzeitig auch Kühlkanal). Dadurch können die in der Statornut angeordneten Leiterelemente, die jeweils mit einer Isolationsschicht versehen sind, durch das Kühlmedium direkt gekühlt werden (direkter Kontakt von Kühlmedium bzw. Dielektrikum mit den Leiterelementen). Somit ist auch bei vergleichsweise hohen Stromdichten eine hinreichende Kühlung möglich. Die Strömungsrichtung des Kühlmediums ist insbesondere entlang bzw. parallel zur Mittellängsachse der Leiterelemente orientiert.

Eine Umströmung der Leiterelemente mit dem Kühlmedium, insbesondere mit Öl, kann somit jeweils innerhalb der Statornut und, sofern das erste Teilgehäuse (erstes Endvolumen) und/oder das zweite Teilgehäuse (zweites Endvolumen) vorhanden sind, auch an dem oder den Wickelköpfen (axial aus dem Statorkörper herausragende Abschnitte der Leiterelemente) erfolgen.

Vorzugsweise kann das Dielektrikum eine maximale Dichte von 0,75 kg/l bei 15°C und/oder eine maximale Viskosität von 6 mm²/s bei 40°C und/oder eine minimale Wärmekapazität von 2,3 kJ/(kg*K) bei 80°C und/oder eine minimale Wärmeleitfähigkeit von 0,12 W/(m/K) bei 80°C und/oder eine maximale elektrische Leitfähigkeit von 1000 nS/m bei 25°C besitzen. Dadurch können vorteilhafte Kühlungseigenschaften erreicht werden.

Vorzugsweise kann die elektrische Maschine als permanenterregte Synchronmaschine oder als fremderregte Synchronmaschine ausgebildet sein.

Weitere vorteilhafte Ausgestaltungen ergeben sich aus der folgenden Beschreibung und der Zeichnung. In der Zeichnung zeigt:
- Fig.1: einen schematischen Längsschnitt einer elektrischen Maschine und
- Fig.2: einen Teilschnitt der elektrischen Maschine aus Fig.1 (Segment) entlang einer in Figur 1 eingezeichneten Schnittachse A-A.

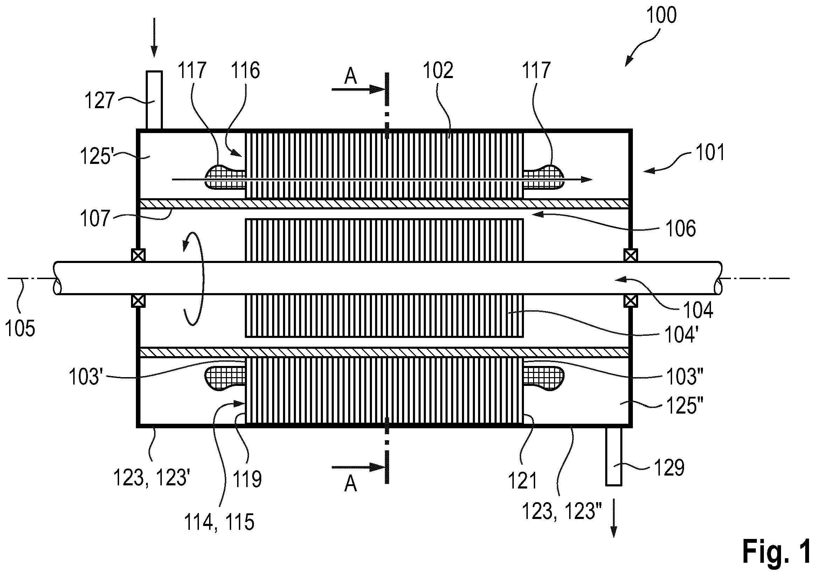

In Fig.1 ist schematisch ein Längsschnitt durch eine elektrische Maschine 100 dargestellt.

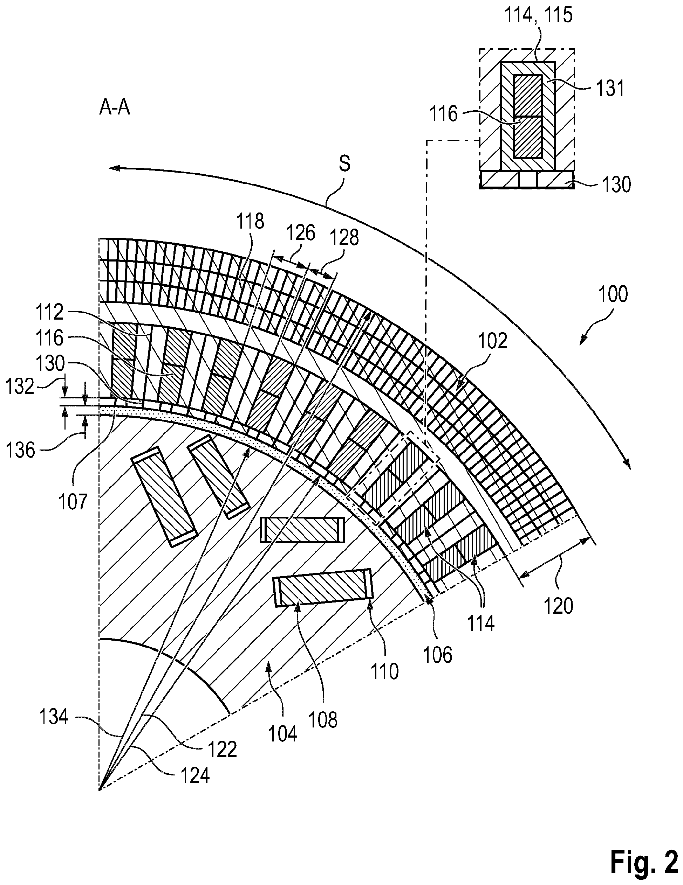

Die elektrische Maschine 100 weist einen Stator 101 mit einem Statorkörper 102 sowie einen Rotor 104 mit einem Permanentmagnet 104' auf. Die Axialrichtung trägt das Bezugszeichen 105. Der Statorkörper 102 umgibt den Rotor 104 nach radial außen, wobei der Statorkörper 102 und der Rotor 104 durch einen Luftspalt 106 voneinander getrennt sind. Im Luftspalt 106 ist ein Spaltrohr 107 angeordnet, welches den Raum, in dem der Rotor 104 angeordnet ist (Rotorraum), von dem Raum, in dem der Stator 101 angeordnet ist (Statorraum), abtrennt. Im Rotor 104 sind im Beispiel mehrere Magnete 108 angeordnet, die optional mit Lufttaschen 110 ausgestattet sind (vgl. Fig.2).

Der Statorkörper 102, dessen Aufbau weiter unten genauer erläutert wird, weist entlang einer Umfangsrichtung abwechselnd Statorzähne 112 und Statornuten 114 mit darin angeordneten Leiterelementen 116 auf (vgl. Fig.2). Die Leiterelemente 116 weisen jeweils aus dem Statorkörper 102 axial herausragende Abschnitte auf, die Wickelköpfe 117 ausbilden (vgl. Fig.1).

Die elektrische Maschine 100 weist eine Kühleinrichtung auf, die mehrere Kühlkanäle 115 aufweist, die sich jeweils von einem Eintritt 119 durch den Statorkörper 102 hindurch zu einem Austritt 121 erstrecken. Die Kühlkanäle 115 sind jeweils mit einem als Kühlmedium dienenden Dielektrikum 131 befüllt (vgl. Fig.2). Im Beispiel fallen die Kühlkanäle 115 jeweils mit den Statornuten 114 zusammen. Das Kühlmedium bzw. Dielektrikum wird somit direkt an den Leiterelementen 116 entlanggeführt, die im Beispiel "von außen" umströmt werden. Das Dielektrikum 131 kann die oben erläuterten Eigenschaften aufweisen.

Die elektrische Maschine 100 weist ein Gehäuse 123 auf, welches ein erstes Teilgehäuse 123' und ein zweites Teilgehäuse 123" aufweist (vgl. Fig.1). Das erste Teilgehäuse 123' ist an einem ersten axialen Ende des Statorkörpers 102 angeordnet und definiert zusammen mit dem Spaltrohr 107 und der Stirnseite 103' des Statorkörpers 102 ein erstes Endvolumen 125', welches im Beispiel als Ringraum ausgebildet ist. Das erste Endvolumen 125' ist mit den Kühlkanälen 115 (Kühlkanaleintritt) im Statorkörper 102 strömungsverbunden und mit als Kühlmedium dienenden Dielektrikum 131 gefüllt. Im ersten Endvolumen 125' sind die an den Leiterelementen 116 ausgebildete Wickelköpfe 117 angeordnet. Am ersten Teilgehäuse 123' ist ein Einlass 127 zur Zuführung von Kühlmedium ausgebildet.

Das zweite Teilgehäuse 123" ist am anderen axialen Ende des Statorkörpers 102 angeordnet und definiert zusammen mit dem Spaltrohr 107 und der Stirnseite 103" des Statorkörpers 102 ein zweites Endvolumen 125", welches im Beispiel als Ringraum ausgebildet ist. Das zweite Endvolumen 125" ist mit den Kühlkanälen 115 (Kühlkanalaustritt) im Statorkörper 102 strömungsverbunden und mit als Kühlmedium dienenden Dielektrikum 131 gefüllt. Im zweiten Endvolumen 125" sind die an den Leiterelementen 116 ausgebildete Wickelköpfe 117 angeordnet. Am zweiten Teilgehäuse 123" ist ein Auslass 129 zur Abführung von Kühlmedium ausgebildet. Der Auslass 129 kann mit dem Einlass 127 strömungsverbunden sein, wie oben erläutert.

In Fig.2 ist schematisch ein Segment S bzw. ein Teilschnitt (Querschnitt) durch eine elektrische Maschine 100 gemäß der Schnittachse A-A in Fig.1 dargestellt.

Wie oben bereits erläutert, weist der Statorkörper 102 entlang einer Umfangsrichtung abwechselnd Statorzähne 112 und Statornuten 114 mit darin angeordneten Leiterelementen 116 auf. Am Statorkörper 102 ist radial außerhalb der Statornuten 114 und der Statorzähne 112 ein Jochabschnitt 118 mit einer sich radial erstreckenden Jochhöhe 120 ausgebildet, wobei der Statorkörper 102 einen Statoraußenradius 122 aufweist. Das Verhältnis v₁ der Jochhöhe 120 bezogen auf den Statoraußenradius 122 beträgt im Beispiel zwischen 0,18 und 0,26 (0,18 ≤ v₁ ≤ 0,26).

Der Statorkörper 102 weist einen Statorinnenradius 124 auf. Das Verhältnis v₂ des Statorinnenradius 124 bezogen auf den Statoraußenradius 122 beträgt im Beispiel zwischen 0,61 und 0,69 (0,61 ≤ v₂ ≤ 0,69). Der Statoraußenradius 122 beträgt im Beispiel zwischen 105 mm und 142,5 mm.

Die elektrische Maschine 100 weist im Beispiel eine Polpaarzahl p von p = 3 auf (insgesamt 6 Pole). Am Statorkörper 102 sind pro Pol und den Leiterelementen 116, die einen Strang bzw. eine Leiterwicklung bilden, im Beispiel drei Statornuten 114 vorgesehen (in Fig.2 entsprechen drei gleich dargestellte Statornuten 114 einem Strang). Mit anderen Worten beträgt die Lochzahl (Anzahl Statornuten 114 pro Pol und Strang) q = 3.

Die Statorzähne 112 weisen jeweils eine Statorzahnbreite 126 auf. Die Statornuten 114 weisen jeweils eine Statornutbreite 128 auf. Im Beispiel beträgt das Verhältnis v₃ der Statorzahnbreite 126 zur Statornutbreite 128 zwischen 1,05 und 1,50 (1,05 ≤ v₃ ≤ 1,50).

Am radial inneren Ende der Statorzähne 112 ist jeweils ein Zahnkopf 130 mit einem bezogen auf die Statorzähne 112 jeweils vergrößerten Querschnitt ausgebildet. Die Zahnköpfe 130 erstecken sich jeweils entlang einer definierten Zahnkopfhöhe 132.

Der Rotor 104 weist einen Rotoraußenradius 134 auf, wobei der Rotoraußenradius 134 um eine radial orientierte Höhe 136 des Luftspalts 106 (Luftspalthöhe 136) geringer ist als der Statorinnenradius 124. Im Luftspalt 106 ist auch das Spaltrohr 107 angeordnet.

Wie oben bereits angedeutet, sind die Leiterelemente 116 direkt gekühlt. Hierzu ist im Beispiel in jeder Statornut 114 ein Kühlkanal 115 vorgesehen (Statornut 114 und Kühlkanal 115 fallen zusammen), wobei die Leiterelemente 116 über die gesamte axiale Länge des Statorkörpers 102 mit dem als Kühlmedium dienenden Dielektrikum 131 gekühlt und durch dieses von außen umströmt werden (vgl. vergrößerter Teilausschnitt in Fig.2).

Die Statornuten 114 sind nach radial innen geöffnet und sind durch das Spaltrohr 107 überdeckt bzw. verschlossen. Das Spaltrohr 107 liegt an den Zahnköpfen 130 der Statorzähne 112 an.

Wie oben bereits erläutert, ist der Statorkörper 102 aus einem Blechpaket ausgebildet, bei dem mehrere Statorblechscheiben entlang der Axialrichtung 105 hintereinander angeordnet sind, wobei die Statorblechscheiben jeweils eine Blechdicke von 0,25mm oder weniger aufweisen (vgl. Fig.1)

Die in Fig. 1 und 2 dargestellte elektrische Maschine 100 kann zum rein elektrischen Antrieb eines Kraftfahrzeugs verwendet werden. Hierzu kann die elektrische Maschine 100 im Motorbetrieb aus einer Kraftfahrzeugbatterie gespeist werden, die mit den Leiterelementen 116 verbunden ist, um in dem Stator 101 ein elektrisch erzeugtes Magnetfeld zu erzeugen, das mit Permanentmagneten 104' des, insbesondere trocken laufenden Rotors, 104 zusammenwirken kann.

## Patentansprüche

1. Elektrische Maschine (100) für ein Fahrzeug, mit einem Stator (101), der einen Statorkörper (102) aufweist, wobei der Statorkörper (102) abwechselnd Statorzähne (112) und Statornuten (114) mit darin angeordneten Leiterelementen (116) aufweist, wobei am Statorkörper (102) radial außerhalb der Statornuten (114) ein Jochabschnitt (118) mit einer sich radial erstreckenden Jochhöhe (120) ausgebildet ist, wobei der Statorkörper (102) einen Statoraußenradius (122) aufweist, und wobei am Statorkörper (102) pro Pol und pro Strang zwei oder drei Statornuten (114) vorgesehen sind, wobei das Verhältnis (v₁) der Jochhöhe (120) bezogen auf den Statoraußenradius (122) zwischen 0,18 und 0,26 beträgt, **dadurch gekennzeichnet, dass** das Verhältnis (v₃) der Statorzahnbreite (126) zur Statornutbreite (128) bei zwei Statornuten (114) pro Pol und pro Strang zwischen 0,50 und 0,75 beträgt oder dass das Verhältnis (v₃) der Statorzahnbreite (126) zur Statornutbreite (128) bei drei Statornuten (114) pro Pol und pro Strang zwischen 1,05 und 1,50 beträgt.

2. Elektrische Maschine (100) nach Anspruch 1, wobei der Statorkörper (102) einen Statorinnenradius (124) aufweist, **dadurch gekennzeichnet, dass** das Verhältnis (V₂) des Statorinnenradius (124) bezogen auf den Statoraußenradius (122) zwischen 0,61 und 0,69 beträgt.

3. Elektrische Maschine (100) nach Anspruch 1 oder 2, **dadurch gekennzeichnet, dass** der Statoraußenradius (122) zwischen 105 mm und 142,5 mm beträgt.

4. Elektrische Maschine (100) nach einem der voranstehenden Ansprüche, **dadurch gekennzeichnet, dass** die elektrische Maschine (100) eine Polpaarzahl (p) von p = 3 aufweist.

5. Elektrische Maschine (100) nach einem der voranstehenden Ansprüche, **dadurch gekennzeichnet, dass** am radial inneren Ende der Statorzähne (112) jeweils ein Zahnkopf (130) mit einem bezogen auf die Statorzähne (112) jeweils vergrößerten Querschnitt ausgebildet ist.

6. Elektrische Maschine (100) nach einem der voranstehenden Ansprüche, **dadurch gekennzeichnet, dass** radial innen an den Statorkörper (102) anschließend ein Spaltrohr (107) angeordnet ist, wobei das Spaltrohr (107) in radialer Richtung betrachtet die Statornuten (114) überdeckt.

7. Elektrische Maschine (100) nach einem der voranstehenden Ansprüche, **dadurch gekennzeichnet, dass** der Statorkörper (102) aus einem Blechpaket ausgebildet ist, bei dem mehrere Statorblechscheiben entlang einer Axialrichtung hintereinander angeordnet sind, wobei die Statorblechscheiben jeweils eine Blechdicke von 0,25mm oder weniger aufweisen.

8. Elektrische Maschine (100) nach einem der voranstehenden Ansprüche, **dadurch gekennzeichnet, dass** eine Kühleinrichtung vorgesehen ist, wobei die Kühleinrichtung mehrere Kühlkanäle (115) aufweist, die sich jeweils von einem Eintritt (119) entlang der Axialrichtung (105) durch den Statorkörper (102) hindurch zu einem Austritt (121) erstrecken, wobei die Kühlkanäle (115) jeweils mit einem als Kühlmedium dienenden Dielektrikum (131) befüllt sind.

9. Elektrische Maschine (100) nach Anspruch 8, **dadurch gekennzeichnet, dass** die Kühlkanäle (115) jeweils in einer der Statornuten (114) angeordnet sind, so dass die Leiterelemente (116) über die gesamte axiale Länge des Statorkörpers (102) mit dem als Kühlmedium dienenden Dielektrikum (131) gekühlt werden, insbesondere von außen umströmt werden.

10. Elektrische Maschine (100) nach Anspruch 8 oder 9, **dadurch gekennzeichnet, dass** das Dielektrikum (131) eine maximale Dichte von 0,75 kg/l bei 15°C und/oder eine maximale Viskosität von 6 mm²/s bei 40°C und/oder eine minimale Wärmekapazität von 2,3 kJ/(kg*K) bei 80°C und/oder eine minimale Wärmeleitfähigkeit von 0,12 W/(m/K) bei 80°C und/oder eine maximale elektrische Leitfähigkeit von 1000 nS/m bei 25°C besitzt.

11. Elektrische Maschine (100) nach einem der voranstehenden Ansprüche, **dadurch gekennzeichnet, dass** die elektrische Maschine (100) als permanenterregte Synchronmaschine oder als fremderregte Synchronmaschine ausgebildet ist.

## Claims

1. An electrical machine (100) for a vehicle, having a stator (101) which has a stator body (102), wherein the stator body (102) comprises alternating stator teeth (112) and stator grooves (114) having conductor elements (116) arranged therein, wherein a yoke portion (118) having a radially extending yoke height (120) is formed on the stator body (102) radially outside the stator grooves (114), wherein the stator body (102) comprises a stator outer radius (122), and wherein two or three stator grooves (114) are provided on the stator body (102) per pole and per strand, wherein the ratio (v₁) of the yoke height (120) relative to the stator outer radius (122) is between 0.18 and 0.26, **characterised in that**
the ratio (v₃) of the stator tooth width (126) to the stator groove width (128) is between 0.50 and 0.75 for two stator grooves (114) per pole and per strand, or that the ratio (v₃) of the stator tooth width (126) to the stator groove width (128) is between 1.05 and 1.50 for three stator grooves (114) per pole and per strand.

2. The electrical machine (100) according to claim 1, wherein the stator body (102) comprises a stator inner radius (124), **characterised in that** the ratio (v₂) of the stator inner radius (124) to the stator outer radius (122) is between 0.61 and 0.69.

3. The electrical machine (100) according to claim 1 or 2, **characterised in that** the stator outer radius (122) is between 105 mm and 142.5 mm.

4. The electrical machine (100) according to any one of the preceding claims, **characterised in that** the electrical machine (100) comprises a pole pair number (p) of p = 3.

5. The electrical machine (100) according to any one of the preceding claims, **characterised in that**, at each radially inner end of the stator teeth (112), a respective tooth head (130) is formed with a cross-section respectively enlarged relative to the stator teeth (112).

6. The electrical machine (100) according to any one of the preceding claims, **characterised in that** a can (107) is arranged radially inside abutting the stator body (102), wherein the can (107) covers the stator grooves (114) when viewed in the radial direction.

7. The electrical machine (100) according to any one of the preceding claims, **characterised in that** the stator body (102) is formed from a sheet metal package in which several stator sheet metal plates are arranged one behind the other along an axial direction, wherein the stator sheet metal plates each have a sheet metal thickness of 0.25 mm or less.

8. The electrical machine (100) according to any one of the preceding claims, **characterised in that** a cooling device is provided, wherein the cooling device comprises several cooling channels (115), each extending from an inlet (119) along the axial direction (105) through the stator body (102) to an outlet (121), wherein the cooling channels (115) are each filled with a dielectric material (131) serving as the cooling medium.

9. The electrical machine (100) according to claim 8, **characterised in that** the cooling channels (115) are each arranged in one of the stator grooves (114), such that the conductor elements (116) are cooled over the entire axial length of the stator body (102) with the dielectric material (131) serving as the cooling medium, in particular surrounded by a flow from the outside.

10. The electrical machine (100) according to claim 8 or 9, **characterised in that** the dielectric material (131) has a maximum density of 0.75 kg/l at 15°C and/or a maximum viscosity of 6 mm²/s at 40°C and/or a minimum thermal capacity of 2.3 kJ/(kg*K) at 80°C and/or a minimum thermal conductivity of 0.12 W/(m/K) at 80°C and/or a maximum electrical conductivity of 1000 nS/m at 25°C.

11. The electrical machine (100) according to any one of the preceding claims, **characterised in that** the electrical machine (100) is configured as a permanently stimulated synchronous machine or as an externally stimulated synchronous machine.

## Revendications

1. Machine électrique (100) pour un véhicule, comportant un stator (101), qui présente un corps de stator (102), dans laquelle le corps de stator (102) présente alternativement des dents de stator (112) et des rainures de stator (114) comportant des éléments conducteurs (116) agencés à l'intérieur, dans laquelle une section de culasse (118) est formée dans le corps de stator (102) radialement à l'extérieur des dents de stator (114), comportant une hauteur de culasse (120) s'étendant radialement, dans laquelle le corps de stator (102) présente un rayon extérieur de stator (122), et dans laquelle deux ou trois rainures de stator (114) sont prévues sur le corps de stator (102) par pôle et par chaîne, dans laquelle le rapport (v₁) de la hauteur de culasse (120) par rapport au rayon extérieur de stator (122) est compris entre 0,18 et 0,26, **caractérisée en ce que**
le rapport (v₃) de la largeur de dent de stator (126) à la largeur de rainure de stator (128) pour deux rainures de stator (114) par pôle et par chaîne est compris entre 0,50 et 0,75 ou **en ce que** le rapport (v₃) de la largeur de dent de stator (126) à la largeur de rainure de stator (128) pour trois rainures de stator (114) par pôle et par chaîne est compris entre 1,05 et 1,50.

2. Machine électrique (100) selon la revendication 1, dans laquelle le corps de stator (102) présente un rayon intérieur de stator (124), **caractérisé en ce que** le rapport (v₂) du rayon intérieur de stator (124) est compris entre 0,61 et 0,69 mm par rapport au rayon extérieur de stator (122).

3. Machine électrique (100) selon la revendication 1 ou la revendication 2, **caractérisée en ce que** le rayon extérieur de stator (122) est compris entre 105 mm et 142,5 mm.

4. Machine électrique (100) selon l'une quelconque des revendications précédentes, **caractérisée en ce que** la machine électrique (100) présente un nombre de paires de pôles (p) de p = 3.

5. Machine électrique (100) selon l'une quelconque des revendications précédentes, **caractérisée en ce qu'**une tête dent (112) est respectivement formée au niveau de l'extrémité radialement intérieure des dents de stator (130) avec une section transversale respectivement agrandie par rapport aux dents de stator (112).

6. Machine électrique (100) selon l'une quelconque des revendications précédentes, **caractérisée en ce qu'**un tube à entrefer (107) est agencé radialement à l'intérieur à la suite du corps de stator (102), dans laquelle le tube à entrefer (107) recouvre les rainures de stator (114) vu dans la direction radiale.

7. Machine électrique (100) selon l'une quelconque des revendications précédentes, **caractérisée en ce que** le corps de stator (102) est formé d'un paquet de tôles, dans lequel plusieurs disques de tôles de stator sont agencées l'un derrière l'autre le long d'une direction axiale, dans laquelle les disques de tôle de stator présentent respectivement une épaisseur de tôle de 0,25 mm ou moins.

8. Machine électrique (100) selon l'une quelconque des revendications précédentes, **caractérisée en ce qu'**un dispositif de refroidissement est prévu, dans laquelle le dispositif de refroidissement présente plusieurs canaux de refroidissement (115), qui s'étendent respectivement d'une entrée (119) le long de la direction axiale (105) à travers le corps de stator (102) jusqu'à une sortie (121), dans laquelle les canaux de refroidissement (115) sont respectivement remplis d'un diélectrique (131) servant d'agent de refroidissement.

9. Machine électrique (100) selon la revendication 8, **caractérisée en ce que** les canaux de refroidissement (115) sont respectivement agencés dans l'une des rainures de stator (114), de sorte que les éléments conducteurs (116) sont refroidis sur toute la longueur axiale du corps de stator (102) à l'aide du diélectrique (131) servant d'agent de refroidissement, en particulier par un écoulement périphérique à l'extérieur de ceux-ci.

10. Machine électrique (100) selon la revendication 8 ou 9, **caractérisée en ce que** le diélectrique (131) possède une épaisseur maximale de 0,75 kg/l à 15 °C et/ou une viscosité maximale de 6 mm²/s à 40 °C et/ou une capacité thermique minimale de 2,3 kJ/(kg*K) à 80 °C et/ou une conductivité thermique minimale de 0,12 W/(m/K) à 80 °C et/ou une conductivité électrique maximale de 1000 nS/m à 25 °C.

11. Machine électrique (100) selon l'une quelconque des revendications précédentes, **caractérisée en ce que** la machine électrique (100) est formée comme une machine synchrone à excitation permanente ou comme une machine synchrone à excitation séparée.
